# EUROPÄISCHE PATENTSCHRIFT

(11) **EP 2 978 793 B1**
(45) Veröffentlichungstag und Bekanntmachung des Hinweises auf die Patenterteilung: **10.05.2017**
(21) Anmeldenummer: 14714660.9
(22) Anmeldetag: 27.03.2014
(51) Int. Cl.: C08G 69/02, C08G 69/42

(54) **FLAMMFESTES POLYAMID, EIN VERFAHREN ZU DESSEN HERSTELLUNG SOWIE DESSEN VERWENDUNG**
FLAME-RESISTANT POLYAMIDE, METHOD FOR THE PRODUCTION OF SAID FLAME-RESISTANT POLYAMIDE, AND USE OF SAID FLAME-RESISTANT POLYAMIDE
POLYAMIDE ININFLAMMABLE, UN PROCÉDÉ POUR SA FABRICATION AINSI QUE SON UTILISATION

(30) Priorität: 28.03.2013 DE 102013005353
(43) Veröffentlichungstag der Anmeldung: 03.02.2016
(73) Patentinhaber: Deutsche Institute für Textil- und Faserforschung Denkendorf, 73770 Denkendorf (DE)
(72) Erfinder: GUTMANN, Rainer, 73760 Ostfildern (DE); GNEITING, Sabine, 72644 Oberboihingen (DE)
(74) Vertreter: Held, Stephan
(86) Internationale Anmeldenummer: PCT/EP2014/056159
(87) Internationale Veröffentlichungsnummer: WO 2014/154805

(56) Entgegenhaltungen:
- CN-A- 101 665 515
- US-A- 5 750 603

## Beschreibung

Die Erfindung betrifft ein flammfestes Polyamid als Kondensationsprodukt von Dicarbonsäuren mit Diaminen sowie einer flammhemmenden Phosphorverbindung, ein Verfahren zur Herstellung dieses flammfesten Polyamids und dessen vorteilhafte Verwendung zur Herstellung von Formkörpern, insbesondere Filamentgarnen.

Polymere auf Basis von handelsüblichen Polyamiden ohne entsprechende Modifizierungszusätze, die zur Erreichung einer Nicht-Entflammbarkeit benötigt werden, werden in die Brandschutzklasse "B" (DIN 4102 - BS 5852 - M1 - UL94) eingeordnet. Erst mittels einer zusätzlichen Behandlung kann die Klasse "B1" (schwer entflammbare Materialien) erreicht werden. Diese Behandlung kann sowohl durch die Einarbeitung einer geeigneten Flammschutzkomponente in die Polyamidkette oder die Polymermatrix erfolgen, ebenso aber durch die Ausrüstung von Polyamidgarnen oder Polyamidtextilien mit geeigneten Flammschutzmitteln. Die dabei zu erreichende Qualität der Schwerentflammbarkeit hängt von den Zusätzen bzw. vom Verfahren ab, welche zur Erreichung der Schwerentflammbarkeit genutzt werden, und wird den Anwendungen und den gesetzlichen Auflagen entsprechend individuell bedient. Eine der gängigsten Vorschriften zur Beurteilung der Brennbarkeit wird von den Underwriters Laboratories in der Vorschrift UL94 beschrieben, welche mit gleichem Inhalt in die Normen IEC/DIN EN 60695-11-10 und -20 und die kanadische CSA C 22.2 eingeflossen ist. Darin wird die Qualität der Schwerentflammbarkeit mit einer Bunsenbrennerflamme getestet und in verschiedenen Stufen wie folgt klassifiziert:
HB: langsames Brennen einer horizontal eingespannten Probe (mit Selbstverlöschen),
V-2: Verlöschen einer vertikal eingespannten Probe innerhalb von 30 Sekunden,
V-1: Verlöschen einer vertikal eingespannten Probe innerhalb von 30 Sekunden ohne brennendes Abtropfen von Kunststoffschmelze und
V-0: Verlöschen einer vertikal eingespannten Probe innerhalb von 10 Sekunden.

Die heute üblicherweise genutzten Verfahren, um ein Material flammfest zu machen, können in physikalische und chemische Methoden unterteilt werden. Bei der physikalischen Polymermodifizierung werden meist 2-Phasensysteme erzeugt, indem entweder flammhemmende Additivzusätze - seien sie mineralischer oder organischer Natur - in das Polymer eingearbeitet werden. Oder es erfolgt eine Beschichtung oder Ausrüstung des polymeren Materials an dessen Oberfläche, wobei flammhemmende Zusätze aufgebracht werden, die physikalisch verankert werden, aber auch reaktiv angebunden werden können, was bereits eine chemische Modifizierung darstellt. Bei der eigentlichen chemischen Polymermodifizierung kann unterschieden werden zwischen der Modifizierung in der Polymerkette, dem Zusatz eines im Sinne des Flammschutzes wirksamen Comonomers im Polymerisationsschritt, der Modifizierung über polymeranaloge Reaktionen an der Hauptkette in Form von Pfropfung bzw. Verzweigung durch die FR-Komponente an der Polymerhauptkette, sowie der Modifizierung durch nachträgliche Vernetzung der Polymerketten untereinander, z.B. durch Bildung eines radikalisch initiierten Polymernetzwerkes, wobei ein "unschmelzbares" Polymer erzeugt werden kann.

Die Aufgabe aller beschriebenen Modifizierungen ist es, den Brandprozess zu unterbinden, indem der Mechanismus des Brennvorgangs an einer Stelle unterbrochen wird. Dazu greifen die Zusätze in z.T. unterschiedlicher Weise in den bekannten Brandzyklus ein, der mit einer thermischen Zersetzung des Polymers in niedermolekulare, gasförmige Komponenten beginnt. Die Pyrolysegase diffundieren aus dem polymeren Werkstoff und kommen mit dem Luftsauerstoff in Kontakt, wobei sie unter Freisetzung von Energie oxidiert werden - Beginn der Flammbildung. Die freigesetzte Energie in Form von Wärme heizt das Material weiter auf und beschleunigt so den Brandprozess zusätzlich. An welcher Stelle die zugesetzte Flammschutzkomponente wirksam wird, wird von deren Chemie bestimmt. Diese Mechanismen werden u.a. in zwei umfassenden Monographien beschrieben (M. Le Bras, G. Camino, S. Bourbigot, R. Delobel(Eds.): Fire Retardancy of Polymers, The Use of Intumescence, Roy. Soc. Chem. Pub., Cambridge, 1998 sowie J. Troitzsch: Plastics Flammability Handbook, Carl Hanser Verlag, München, 2004), die den Stand der Forschung repräsentieren. Hinsichtlich der Verwendung heute üblicher Flammschutzmittel liegt eine ähnlich umfassende Studie des Umwelt Bundesamtes mit der Berichtsnummer UBA-FB 000171/2 vor. Der dreiteilige Berichts mit dem Titel "Erarbeitung von Bewertungsgrundlagen zur Substitution umweltrelevanter Flammschutzmittel", bestehend aus Band I "Ergebnisse und zusammenfassende Übersicht", Band II "Flammhemmende Ausrüstung ausgewählter Produkte - anwendungsbezogene Betrachtung: Stand der Technik, Trend, Alternativen" (von besonderer Bedeutung ist Kapitel VI "Textilanwendungen") und Band III "Toxikologisch-ökotoxikologische Stoffprofile ausgewählter Flammschutzmittel" (veröffentlicht von den Autoren A. Leisewitz, H. Kruse, E. Schramm, W. Schwarz, O. Paulsen, C. Schau, M. Wieben, U. Böhde im März 2001).

Der Brandschutz ist seit alters her bis zum heutigen Tage eine auch volkswirtschaftlich bedeutende Aufgabe, deren aktuelle Fragestellungen sich gegenüber früher neben den grundsätzlichen Wirkungsweisen bei der Brand-bekämpfung und zur Verhinderung des Brennens mit den resultierenden toxischen und ökotoxischen Aspekten der Chemie des Brandprozesses befassen. Wie die Alltagserfahrung lehrt, führt der Abschluss des Brandherds von der Luft- bzw. Sauerstoffzufuhr zum Verlöschen des Brandes. Dieses Prinzip wird beim Ersticken eines Brandes mechanisch praktiziert. Andererseits hat man sich diese Grundidee viele Jahre lang beim Einsatz von halogenhaltigen Systemen als Brandschutzmittel zunutze gemacht. Dabei werden im Brandfall aus diesen Systemen chemische Komponenten emittiert, die über schnelle radikalische Reaktionen in der Lage sind, den Sauerstoff in unmittelbarer Nähe des Brandes chemisch zu binden und auf diese Weise die Konzentration an freiem Sauerstoff zu reduzieren. Dieser steht dann nicht mehr in ausreichendem Maße für das Brennen des Polymers zur Verfügung und die Flamme erlischt. Die hierfür in Frage kommenden halogenhaltigen Verbindungen sind mehrfach substituierte ungesättigte, cyclische Aliphaten und Heteroaliphaten sowie kondensierte oder über Heteroatome verbrückte aromatische Systeme (US 3810861 A, DE 2604275 A1, EP 79177 A1). Häufig werden diese Verbindungen auch in Kombination mit Metalloxiden/-hydoxiden, Carbonaten, Acetaten, Phosphaten, Boraten etc. eingesetzt, da von diesen eine synergistische Wirkung auf den flammhemmenden Effekt ausgeht (DE 2114235 A, AT 355307 B, DE 2114235 A, US 3810861 A). Beispiele dazu finden sich in verschiedenen, meist älteren Patenten, da diese Systeme in jüngster Zeit erheblich unter Druck geraten sind, weil sie im Einsatzfall toxische und ökotoxische Produkte generieren.

Als Alternative hierzu wurde in den letzten Jahren mehr und mehr die Verwendung von Zusätzen untersucht, die in der Lage sind das Polymer durch die Ausbildung einer Schutzschicht vor dem Brennen zu bewahren. Erreicht wird dieser Effekt durch den Zusatz von mehrkomponentigen Systemen zu den verschiedenen Polymeren, wobei diese Zusätze die Verkohlung fördern, wie z.B. Polyalkohole, Treibgase entwickeln, wie z.B. Melaminverbindungen, oder Wasser freisetzen können, wie z.B. phosphorhaltige Säuren, die dabei in Polyphosphorsäuren übergehen und so eine hochschmelzende oder poröse Schutzschicht an der Polymeroberfläche erzeugen. Dadurch wird dem Brand Wärme entzogen, die Wärmediffusion erschwert und die Emission von Pyrolysegasen bzw. die Diffusion von Sauerstoff reduziert (DE 4015490 A1, EP 245207 A2, EP 496241 A1). Ein Nachteil dieser Systeme ist ihre notwendigerweise hohe Dosierung, die speziell bei der Extrusion zu Fasern zu erheblichen Verarbeitungsproblemen führt sowie die Gebrauchseigenschaften so deutlich verschlechtern kann, dass eine Anwendung im Faserbereich nicht mehr möglich ist, während dies bei anderen Extrusionsprozessen kein Ausschlusskriterium darstellt (S.V. Levchik, E.D. Weil; A Review of Recent Progress in Phosphorous-based Flame Retardants, J. Fire Sci. 2006, 24, 345). Die Frage der Dosierung und der dadurch veränderten Verarbeitungs- und Gebrauchseigenschaften unterscheidet somit den Einsatz von Flammschutzmitteln in Textilien wesentlich von den übrigen mengenmäßig meist größeren Einsatzgebieten (Elektro- und Elektroniksektor, Baubereich, IT- und TV-Anwendungen) und erfordert gesonderte Lösungen, die speziell im Fall der Polyamide bisher nicht vorhanden sind. Zwei Ausnahmen stellen hier lediglich die in jüngster Zeit beschriebene Ausrüstung von Polyamid-6.6-Textilien durch Oberflächenmodifizierung und Vernetzung mit Thioharnstoff dar (J. Sun, X. Gu, Q. Dong, S. Zhang et al.; Polym. Adv. Technol. 2013, 24(1), 10) sowie das mittlerweile kommerzielle System (Melliand Textilberichte 4/2012, S. 210) einer halogenfreien Beschichtung für Polyamidfasern (US 20090176424 A1, WO 2010/086621 A2), welche aus einem Silikon-haltigen System und Zusatzkomponenten über die Ausbildung einer schützenden Nanokomposit-Kohlenstoffschicht (A.B. Morgan; Flame Retardant Polymer layered Silicate Nanocomposites: A Review of Commercial and open Literature Systems, Polym. Adv. Technol. 2006, 17(4), 206) einen effektiven Flammschutz bewirkt.

Demgegenüber können Systeme, die nur auf Phosphin- oder Phosphonsäurederivaten basieren - insbesondere wenn sie in die Polymerkette eingebaut sind - erheblich niedriger dosiert werden, wobei sie dennoch eine ausreichende Flammschutzwirkung entfalten. Jedoch gibt es auf dieser Grundlage, ebenso wie für alle anderen gängigen Flammschutzsysteme, keine für eine Anwendung als Additiv bei der Polyamidfaserherstellung geeigneten Systeme, da die Temperaturbeständigkeit der Phosphorverbindungen in der Regel nicht ausreichend ist. Für den Einsatz in anderen Polyamidanwendungen, wie z.B. in elektrischen Leiterplatten, existieren hingegen Lösungen unter alleiniger Verwendung von Phosphorverbindungen, die dem Polymer bei der Verarbeitung beigemischt werden können.

Im Gegensatz dazu werden Phosphin- oder Phosphonsäurederivaten seit vielen Jahren in Polyesterfaseranwendungen eingesetzt. Dabei werden diese Anwendungen im Wesentlichen von einem Produkt (Trevira CS) dominiert, bei dem die Phosphorkomponente (Exolit^{®}PE110) in der Polymerhauptkette einkondensiert ist (EP 0551850 A1, EP 1837338 A1, EP 1837340 A1). Verfahren, um diese oder strukturell ähnliche Verbindungen auch in Polyamiden einzusetzen und daraus Fasern zu extrudieren, werden zwar beschrieben (EP 1935894 A1, US 4649177, US 5750603, US 5952406). Aber es befinden sich bis heute noch keine entsprechenden Produkte auf dem Markt, was u.a. daran liegt, dass speziell bei der Herstellung eines Copolyamids, d.h. beim Einkondensieren der Phosphorkomponente in die Polyamidkette, nicht die erforderlichen Molekulargewichte aufgebaut werden und das Copolyamid einer Nachkondensation unterworfen werden muss, um die notwendige Verarbeitungsfähigkeit der Schmelze im Hinblick auf eine Faserherstellung zu erreichen. Die Polymerisation wird nach diesem bekannten Verfahren beendet, indem das Polymer aus dem Reaktor ausgetragen und granuliert und später einer Festphasen-Polykondensation unterworfen wird. Erst dabei wird das für eine Anwendung als extrudierbares Polymer notwendige Molekulargewicht aufgebaut. Dieses Vorgehen hat sich nicht als vorteilhaft erwiesen.

Auch der Einsatz Phosphor-haltiger Präpolymere unter Zusatz von Harz-Härter-Systemen wird beansprucht. Diese Systeme erlauben es, den notwendigen Massenanteil der Phosphorkomponente bezüglich der Flammschutzwirkung zu reduzieren, was den mechanischen Eigenschaften des Materials zugute kommt (DE 102006060339 A1, DE 102005015605 A1). Des Weiteren werden verschiedene cyclische Phosphinsäurederivate auf Basis von 9,10-Dihydro-9-oxa-10-phosphaphenanthren-10-oxid (DOPO) beschrieben, die neben einem Einsatz vorzugsweise in Duroplasten auch in thermoplastischen Polyestern und Polyamiden zur Faserherstellung verwendet werden sollen (DE 2646218 A1, EP 1710264 A2, EP 1710264 B1).

Ausgehend von dem vorstehend geschilderten Stand der Technik liegt der Erfindung die Aufgabe zugrunde, verbesserte flammfeste Polyamide, ein besonders geeignetes Verfahren zu deren Herstellung sowie vorteilhafte Verwendungen dieser flammfesten Polyamide vorzuschlagen.

Die Erfindung löst diese Aufgabe durch ein flammfestes Polyamid FR als Kondensationsprodukt von Dicarbonsäuren mit Diaminen sowie einer flammhemmenden Phosphorverbindung, das dadurch gekennzeichnet ist, dass das flammfeste Polyamid FR in seiner Hauptkette neben den Amid-Struktureinheiten der Formel (I)

-CO-NH- (I)

Phosphinsäureamid-Struktureinheiten der Formel (II)

-PO(R¹)-NH- (II)

enthält, wobei R¹ Wasserstoff oder einen organischen Rest bedeutet und in den einzelnen Phosphinsäureamid-Struktureinheiten innerhalb der Hauptkette unterschiedlich sein kann, und dass das Polyamid FR eine relative Viskosität, gemessen als 1%ige Lösung in 96%iger Schwefelsäure bei 25°C, von mindestens 2,0 (nach DIN 51562) erreicht.

Eine besonders vorteilhafte Ausgestaltung des erfindungsgemäßen flammfesten Polyamids zeichnet sich dadurch aus, dass der angesprochene Rest R¹ eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- oder Tolylgruppe, eine Alkylarylgruppe, insbesondere eine Triphenylmethylgruppe, und/oder eine Arylalkylgruppe, insbesondere eine i-Propylphenyl-, t-Butylphenyl- oder Nonylphenylgruppe bedeutet. Hierbei ist die C₁-C₃-Alkylgruppe vorzugsweise eine Methyl-, Ethyl- und/oder 2-Propylgruppe.

Die Erfindung führt zu der Erkenntnis, dass durch die nach dem nachfolgend beschriebenen Verfahren in das Polyamid eingeführten Phosphinsäureamid-Struktureinheiten der bezeichneten Formel (II) die wünschenswerte Verbesserung der Flammfestigkeit erreicht wird. Dabei ist es vorteilhaft, dass das flammfeste Polyamid FR aufgrund der Phosphinsäureamid-Struktureinheiten, bezogen auf das reine flammfeste Polyamid FR, mindestens 0,01 und/oder höchstens 10,0 Gew.-% Phosphor enthält, wobei es bevorzugt ist, dass das Polyamid FR 0,01 bis 8 Gew.-%, insbesondere 0,01 bis 4,0 Gew.-% Phosphor enthält, wobei der Bereich von 0,01 bis 1,5 Gew.-% Phosphor besonders bevorzugt ist. Unter praktischen Gesichtspunkten können folgende Wertepaare für den Phosphorgehalt als vorteilhaft bezeichnet werden: 0,1 bis 10 Gew.-%, vorzugsweise 0,5 bis 6 Gew.-% und insbesondere 0,1 bis 1,5 Gew.-% Phosphor. In den oben bezeichneten gewichtsprozentualen Rahmenbedingungen wird in besonderem Maße eine verbesserte Flammfestigkeit bei dem angestrebten Polyamid FR erreicht, ohne dass die sonst wünschenswerten Eigenschaften des Polyamids FR beeinträchtigt werden. Dabei hat es sich als vorteilhaft erwiesen, dass das erfindungsgemäße flammfeste Polyamid eine Nichtentflammbarkeit aufweist, die den Vorgaben der Vorschrift UL 94 V.0 entspricht.

Die Erfindung erschließt weitere Möglichkeiten der Modifizierung des flammfesten Polyamids FR, so beispielsweise durch das Einbeziehen eigenschaftsverbessernder Additive, insbesondere von UV-Stabilisatoren, Thermostabilisatoren und/oder Mattierungsmitteln. Zwar unterliegen diese keiner mengenmäßigen Beschränkung. Jedoch ist es im Allgemeinen zweckmäßig, wenn das flammfeste Polyamid FR etwa 0,01 bis 1,0 Gew.-%, insbesondere 0,5 bis 0,7 Gew.-%, Additiv enthält.

Für die Weiterverarbeitungen des flammfesten Polyamids FR, worauf nachfolgend noch eingegangen wird, hat es sich als vorteilhaft erwiesen, wenn die bereits angesprochene relative Viskosität (gemessen nach DIN 51562) mindestens 2,4 erreicht. Besondere vorteilhafte Ergebnisse werden dann erreicht, wenn die relative Viskosität (gemessen nach DIN 51562) mindestens 2,4 und/oder höchstens 4,0 erreicht.

Die oben bezeichnete relative Viskosität des erfindungsgemäßen flammfesten Polyamids FR ist eine Größe, die im Hinblick auf die Weiterverarbeitung von Bedeutung ist, insbesondere im Rahmen eines Extrusionsverfahrens, wie eines Blasform-, Spritzguss- oder Schmelzspinnverfahrens. Dabei stehen verschiedene, nachfolgend noch angesprochene Anwendungsfälle im Vordergrund, so insbesondere die Herstellung von Monofilament-, Multifilament- sowie Stapelfasergarnen. Hierzu könnten äquivalent, dies unter Angabe von Rahmenwerten, Molekulargewichte angegeben werden, innerhalb derer die Erfindung in praktischer Weise und mit Vorteil verwirklicht werden kann, wobei das Molekulargewicht, das sich aus der relativen Viskosität (sh. oben) ergibt, wenn diese über die Huggins-Gleichung unter Verwendung der Konstanten k_{H}=0,30 zur Grenzviskositätszahl und daraus über die Mark-Houwing-Staudinger-Gleichung unter Verwendung von K=0,115 (ml/g) und α=0,67 weiterentwickelt wird und in Form des Viskositätsmittelwertes des Molekulargewichts (Mv) vorliegt, vorzugsweise zwischen etwa 15000 g/mol und 65000 g/mol, insbesondere zwischen 20000 g/mol und 50000 g/mol, liegt. Somit würde sich eine geeignete Molekulargewichtsangabe auf die zunächst in einfacher Weise zu übermittelnde relative Viskosität beziehen. Die ermittelte relative Viskosität ist dem Fachmann aber ein besonders geeigneter Parameter, um die Erfindung in der wünschenswerten Weise unter Lösung der gestellten Aufgabe zu praktizieren.

Die Erfindung ist nicht auf spezielle Diamin- und Dicarbonsäuren als Grundmaterialien zur Herstellung des angestrebten flammfesten Polyamids beschränkt. Dennoch können folgende Kombinationen als besonders vorteilhaft angegeben werden:
PA6.9 (Hexamethylendiamin/Acelainsäure),
PA6.12 (Hexamethylendiamin/Dodecansäure),
PA4.6 (Tetramethylendiamin/Adipinsäure),
PA12.12 (Dodecandiamin/Dodecandisäure) oder
PA6.6 (Hexamethylendiamin/Adipinsäure),
jeweils in erfindungsgemäß modifizierter Form.

Eine besonders vorteilhafte Weiterbildung des erfindungsgemäßen technischen Gedankens besteht in einem flammfesten Polyamid, das in einem Gemisch mit einem weiteren Polyamid in Form eines nicht flammfesten Polyamids, insbesondere mit Polyamid 6 (Polycaprolactam), vorliegt, wobei der Phosphorgehalt des Gemisches durch das flammfeste einbezogene Polyamid FR auf mindestens 0,01 Gew.-% und/oder höchstens 10,0 Gew.-%, insbesondere höchstens 8,0 Gew.-% eingestellt ist, wobei der Phosphorgehalt von 0,01 bis 4,0 Gew.-%, insbesondere 0,01 bis 1,5 Gew.-%, besonders vorteilhaft ist. Als bevorzugte Rahmenbedingungen können auch angegeben werden: 0,1 bis 10,0 Gew.-%, insbesondere 0,5 bis 6,0 Gew.-%). So kann erfindungsgemäß ein flammfestes bzw. nicht brennbares Polyamid FR dadurch erhalten werden, indem das flammfeste Polyamid in dem bezeichneten Gemisch aufgeschmolzen und insbesondere zu einem Multifilamentgarn extrudiert wird. Durch das Blenden mit beispielsweise einem Polyamid 6 (Polycaprolactam) wird der Phosphorgehalt im Multifilamentgarn weiter reduziert und kann so weit vermindert werden, bis die Grenze der Nicht-Brennbarkeit erreicht wird. Der bevorzugte Gehalt an Phosphor in einem derartigen Polymergemisch liegt, wie oben gezeigt, zwischen 0,01 und 1,5 Gew.-%. Bei dessen Weiterverarbeitung, beispielsweise zu dem angesprochenen Multifilamentgarn, ist es besonders vorteilhaft, die relative Viskosität entsprechend einzustellen. Zweckmäßig ist es, dass das Gemisch aus flammfestem Polyamid FR und dem üblichen bzw. standardmäßigem nicht flammfesten Polyamid eine relative Viskosität, gemessen als 1%-ige Lösung in 96%-iger Schwefelsäure bei 25°C, von mindestens 2,0, insbesondere von mindestens 2,4 und/oder höchstens 4,0, erreicht (gemessen nach DIN 51562). Der Phosphorgehalt des Gemisches beträgt hier insbesondere mindestens 0,05%. Die relative Viskosität beträgt in der Regel höchstens 3,5, insbesondere höchstens 2,9. Im Allgemeinen liegt sie bei weniger als 2,7. Bei der Einstellung der optimalen Viskosität spielen auch anwendungsspezifische Gesichtspunkte eine Rolle. Hier könnte für die relative Viskosität nach obiger Bestimmung angegeben werden: für technische Garne hoher Festigkeitswerte über 3, insbesondere bis zu 3,5, für Garne für Teppiche 2,7 bis 3,0, für Garne für bekleidungstextile Anwendungen 2,4 bis 2,7.

Das oben beschriebene erfindungsgemäße flammfeste Polyamid FR lässt sich besonders vorteilhaft nach einem Verfahren herstellen, bei dem im Rahmen einer Polyamid-Synthese ein oder mehrere Diamine mit einer oder mehreren Dicarbonsäuren unter einem Druck von mindestens 16 bar, insbesondere einem Druck von 20,0 bar bis 25 bar, und erhöhter Temperatur, insbesondere einer Temperatur von weniger als 295°C, insbesondere von 230°C bis 280°C, in Gegenwart von Wasser, wobei die Menge an Wasser insbesondere höchstens 25 Gew.-% und/oder insbesondere mindestens 10 Gew.-%, bezogen auf die Reaktionsmischung, beträgt, um den unter der gewählten Reaktionstemperatur benötigten Druck im Reaktor aufzubauen, und mit einer oder mehreren Diphosphinsäuren der Formel (III) 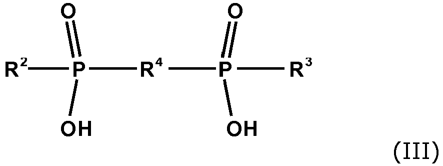 und/oder mit einer oder mehreren Carbon-Phosphinsäuren der Formel (IV), 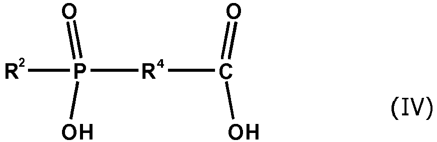 polykondensiert werden, wobei unter den der Polykondensation zugrunde liegenden stöchiometrischen Bedingungen die Dicarbonsäure zum Teil durch die Diphosphinsäure (III) und/ oder die Carbon-Phosphinsäure (IV) ersetzt wird, wobei die Dicarbonsäure, die Diphosphinsäure und die Carbon-Phosphinsäure in Form der AH-Salze mit den eingesetzten Diaminen der Polykondensation unterworfen werden, wobei nach der Polykondensation eine Drucksenkung im Reaktionsraum auf weniger als 250 mbar, insbesondere weniger als 10 mbar durchgeführt wird, wodurch das Polymerisationsgleichgewicht verstärkt auf die Seite des hochviskosen Produkts verschoben wird, und wobei in den Formeln (III) und (IV) bedeuten:
R² und R³, unabhängig voneinander, eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- oder Tolylgruppe, eine Alkylarylgruppe, insbesondere eine Triphenylmethylgruppe, und/oder eine Arylalkylgruppe, insbesondere eine i-Propylphenyl, t.Butylphenyl- oder Nonylphenylgruppe, und
R⁴ einen zweiwertigen organischen Rest, insbesondere in Form eines linearen, cyclischen oder verzweigten C₁-C₁₀-Alkylen-, insbesondere C₁-C₄-Alkylen-Restes, eines C₁-C₁₀-Alkenylen-, insbesondere eines C₁-C₆-Alkenylen-Restes, eines C₆-C₁₀-Arylen-, insbesondere eines 1,4-Phenylen-Restes.

Eine besonders vorteilhafte Weiterbildung des erfindungsgemäßen Verfahrens besteht darin, dass die Drucksenkung auf weniger als 100 mbar, vorzugsweise auf 1 bis 100 mbar, insbesondere 1 bis 50 mbar, durchgeführt wird. Ganz besonders vorteilhaft ist es, wenn die Drucksenkung auf 1 bis 10 mbar durchgeführt wird.

Eine weitere vorteilhafte Ausgestaltung der Erfindung besteht darin, dass das Mengenverhältnis der Reaktionspartner in Form der Diamine, Dicarbonsäuren, Diphosphinsäuren sowie der Carbon-Phosphinsäuren so eingestellt wird, dass der Phosphorgehalt des erhaltenen flammfesten Polyamid-Verfahrenserzeugnisses, bezogen auf das Polyamid FR mindestens 0,01 Gew.-% und/oder höchstens 10,0 Gew.-% beträgt weitere vorteilhafte Rahmenbedingungen sind oben bezeichnet, worauf verwiesen sei.

Des Weiteren ist das erfindungsgemäße Verfahren dadurch vorteilhaft auszugestalten, indem die aus einem AH-Salz der Di-Phosphinsäure der Formel (III) und/oder der Carbon-Phosphinsäure der Formel (IV) hergestellten flammfesten Polyamide ohne Abmischung oder in Abmischung mit einem weiteren nicht-Phosphor-haltigen, nicht flammfesten Polyamid vorliegen und der weiteren Verwendung zugeführt werden.

Die Erfindung geht demzufolge von der Erkenntnis aus, dass zur Herstellung des erfindungsgemäßen flammfesten Polyamids FR die Einkondensierung von Diphosphinsäure und/oder einer Carbon-Phosphinsäure in der Hauptkette des Polyamids herangezogen wird, insbesondere dies und beispielhaft im Zusammenhang mit der PA6.6-Synthese aus Adipinsäure und Hexamethylendiamin, wobei ein AH-Salz der phosphorhaltigen Säuren entsprechend dem in der PA6.6-Synthese aus Adipinsäure und Hexamethylendiamin hergestellten AH-Salz bereitgestellt wird. Es wird demzufolge im Rahmen des erfindungsgemäßen Verfahrens ein intrinsisch nicht brennbares bzw. flammfestes Copolyamid hergestellt, bei dem die jeweilige Dicarbonsäure, insbesondere Adipinsäure, zum Teil durch eine Diphosphin-Säure und/oder eine gemischte Carbon-Phosphinsäure ersetzt wird. Diese werden je nach eingesetztem Masseanteil statistisch in die Polyamidkette eingebaut, ohne dabei die Polymerisationsreaktion oder die physikalischen Eigenschaften des Polyamids wesentlich zu beeinflussen. Dabei ist es von Bedeutung, um eine Optimierung bei dem erfindungsgemäßen technischen Vorschlag zu erreichen, die beiden AH-Salze in einem geeigneten Mischungsverhältnis gemeinsam in einer für die PA6.6-Synthese üblicherweise benutzten Polymerisationsanlage zu polymerisieren, wobei eine für die spätere Faseranwendung übliche Viskosität aufgebaut wird. In diesem Zusammenhang sei auf die nachfolgende Tabelle 1 verwiesen, in der erfindungsgemäß in Frage kommende aliphatische Diamine und aliphatische Dicarbonsäuren mit dem jeweiligen Schmelzpunkt der zuzuordnenden Polyamide bezeichnet werden. Die vorstehenden technologischen Ausführungen, wenngleich insbesondere auch auf die Adipinsäure und Hexamethylendiamin bezogen, gelten generell für alle erfindungsgemäß in Betracht kommenden Paarungen, wie Carbonsäure/ Diamin sowie Diphosphin-Säure bzw. Carbon-Phosphinsäure.

Die bei dem erfindungsgemäßen Verfahren vollzogene Polykondensation folgt den standardgemäßen Regeln, die dem Fachmann hinlänglich bekannt sind. Insbesondere kommt es bei dem erfindungsgemäßen Verfahren ebenso darauf an, vorzugsweise das exakte stöchiometrische Verhältnis von 1:1 für die Paarung aus Diphosphin-Säure bzw. Carbon-Phosphinsäure mit dem Diamin einzuhalten. Konkret kann zum erfindungsgemäßen Verfahren noch Folgendes ausgeführt werden:
Die Polykondensation erfolgt vorzugsweise unter Zusatz von Wasser bei einer Temperatur gemäß obigen Angaben, zweckmäßigerweise innerhalb von drei bis vier Stunden, bei einem Druck, wie oben angegeben. Danach wird über ein Nadelventil entspannt und der Wasserdampf abgelassen, wobei innerhalb von 45 Minuten das Drehmoment am Rührer von 0,5 Nm auf 8-9 Nm ansteigt. Die Polymerschmelze wird dann abgelassen, granuliert, gewaschen und im Feinvakuum getrocknet. In dieser Form erfolgt die Verarbeitung nach einem Schmelzspinnprozess, wobei ein Multifilamentgarn erzeugt wird, welches selbst bei permanenter Einwirkung einer Flamme nicht zum Brennen gebracht werden kann.

Grundsätzlich gilt hier die allgemeine Regel, dass es von Vorteil ist, dass die Mengenverhältnisse der Reaktionspartner in Form der Diamine, Dicarbonsäuren, Diphosphinsäuren sowie der Carbon-Phosphinsäuren so eingestellt werden, dass der Phosphorgehalt des erhaltenen Polyamids FR den oben genannten vorteilhaften Rahmenbedingungen folgt.

Sachdienlich ist es, wenn man der Herstellung der beim erfindungsgemäßen Verfahren eingesetzten AH-Salze Aufmerksamkeit zuwendet. So ist es von Vorteil, wenn die AH-Salze der Di-Phosphinsäure der Formel (III) und/oder der Carbon-Phosphinsäure der Formel (IV) allein oder in Abmischung mit einem weiteren (standardgemäßen) AH-Salz der Dicarbonsäure hergestellt und der Polykondensation zum flammfesten Polyamid FR unterworfen werden. Diese allgemeinen Aussagen lassen sich wie folgt durch konkrete Beschreibungen nützlich erläutern:
So ist es bevorzugt, dass als gemischte Carbon-Phosphinsäure z.B. die 3-Hydroxyphenyl-phosphinyl-propionsäure (3-HPP) in einer Konzentration eingesetzt wird, wobei deren Einsatzmenge im fertigen Copolyamid zu einem Phosphorgehalt führt, wie vorstehend bereits bezeichnet, insbesondere in der Größenordnung von etwa 1 Gew.-%. Dabei hat es sich als zweckmäßig erwiesen, dass bei der Copolyamid-Synthese die Phosphincarbonsäure als AH-Salze unter Verwendung des Diamins, insbesondere des 1,6-Diaminohexans, gemeinsam mit einem AH-Salz aus der Dicarbonsäure, insbesondere der Adipinsäure, sowie des Diamins, insbesondere des 1,6-Diaminohexans, eingesetzt wird. Dabei hat es sich zudem als vorteilhaft erwiesen, das erstere AH-Salz (der phosphorhaltigen Säure) im Vergleich zum letzteren Salz (Dicarbonsäure) in einem Massenanteil im Bereich von 10 bis 90 % zu verwenden.

Die erfindungsgemäßen flammfesten Polyamide bzw. die nach dem beschriebenen Verfahren hergestellten Produkte zeigen vorteilhafte Eigenschaften, wenn sie zu Formkörpern, insbesondere zu Folien, Bauteilen und Mono-Filamenten bzw. Filamentgarnen weiterverarbeitet werden. Dies erfolgt zweckmäßigerweise im Rahmen eines Schmelzverfahrens, insbesondere mit einem Blasform- bzw. einem Spritzgussverfahren zur Herstellung von Folien bzw. Bauteilen sowie einem Filamentspinnverfahren zur Herstellung von Mono- und/oder Multifilament- sowie Stapelfasergarnen. Bei der Herstellung nach einem Filamentspinnverfahren ist es zweckmäßig, dass die Garne in einer Schmelzspinn-Wickel-Anlage hergestellt werden und diese unter einer Spinndüse mit einer Geschwindigkeit von 500 bis 5000 m/min, insbesondere von 1500 bis 4500 m/min, abgezogen und auf Spulen aufgewickelt bzw. zu Stapeln geschnitten und zu Ballen gepresst werden. Dabei ist es besonders vorteilhaft, wenn die Herstellung der Garne durch Variation des Polymerdurchsatzes im vorgeschalteten Extruder und der Aufwickelgeschwindigkeit so gesteuert wird, dass der Filamenttiter der erhaltenen Filamentgarne auf 1 bis 20 dtex eingestellt wird. Beachtenswert ist es und führt zu Vorteilen, wenn die endgültige anwendungsbezogene Einstellung des Filamenttiters in einem üblichen Streck- oder Streck-Texturierschritt derartig erfolgt, dass der Filamenttiter im Hinblick auf die spätere Anwendung zur Herstellung von Teppichen 10 bis 20 dtex, zur Herstellung von Bekleidungsstücken 1 bis 5 dtex und zur Herstellung von Textilien auf Basis von Mikrofasern weniger als etwa 1 dtex beträgt. Somit zeigt es sich, dass die hergestellten Filamente bzw. Filamentgarne sowie daraus gewonnene Stapelfasern mit Vorteil zur Herstellung textiler Flächengebilde, insbesondere von Gestricken, Geweben, Vliesen und Gewirken, herangezogen werden können.

In Verbindung mit der Weiterverarbeitung des erfindungsgemäßen flammfesten Polyamids zu Filament- bzw. Stapelfasergarnen kann auf folgende nützliche Weiterbildung verwiesen werden: So ist es vorteilhaft, wenn das erfindungsgemäße Verfahren, insbesondere zur Polymerverarbeitung im Extruder bei Temperaturen von nicht mehr als 285°C, so gesteuert wird, dass der Filamenttiter der hergestellten Filamentgarne auf 0,4 dtex bis 20 dtex eingestellt wird. Dabei erfolgt die Einstellung des Filamenttiters vorzugsweise derartig, dass bei der späteren Anwendung des Filamentgarns als technisches Garn oder als Garn für den Heimtextilbereich der Filamenttiter zwischen etwa 10 und 20 dtex, zur Anwendung im Bekleidungssektor zwischen etwa 1 und 5 dtex, bei Textilien auf Basis von Mikrofasern bei weniger als etwa 1 dtex, insbesondere unterhalb 0,8 dtex, liegt, worauf bereits konkret hingewiesen wurde.

Die Durchführung des erfindungsgemäßen Verfahrens bzw. die Verwirklichung der Erfindung in Form des flammfesten Polyamids eröffnet neuartige Möglichkeiten, intrinsisch flammfeste Polyamide, ausgehend von Phosphor-haltigen gemischten AH-Salzen der bezeichneten Art herzustellen, ohne dass eine grundsätzliche Änderung bei der Durchführung der Polymersynthese bzw. der Polykondensation oder bei der Herstellung der extrudierten Produkte notwendig ist, wobei allerdings die erfindungsrelevanten Abweichungen, oben im Einzelnen dargestellt, zu berücksichtigen sind. Möglich wird dies dadurch, dass die notwendige Dotierung der hergestellten Polyamide mit einem wünschenswerten Phosphoranteil der oben bezeichneten Rahmenbedingungen, insbesondere unter 1 Gew.-%, die üblicherweise in der jeweiligen Anwendung zu erreichenden Eigenschaften der extrudierten Produkte nicht wesentlich beeinflusst.

Dies stellt einen bisher nicht bekannten technischen Vorschlag dar, bei dem gegenüber der bisherigen Praxis, in der überwiegend salzartige und/oder niedermolekulare Phosphorverbindungen in vergleichsweise höheren Konzentrationen zugesetzt werden, homogene Polymersysteme mit niedrigeren Phosphorgehalten durch Einbau der Phosphorkomponente in die Polymerkette erzeugt werden.

Vorstehend wurde auf eine aufwändige Nachkondensation im Rahmen einer Festphasen-Polykondensation eingegangen. Hier zeigt die Erfindung einen bedeutsamen Vorteil: Mit dem erfindungsmäßen Verfahren kann das notwendige Molekulargewicht des flammfesten Polyamids FR am Ende der Polymerisationsreaktion direkt erhalten werden, indem der Druck im Reaktor unter Atmosphärendruck abgesenkt wird, wobei es besonders vorteilhaft ist, dass die Drucksenkung auf 1 bis 100 mbar, vorzugsweise 1 bis 50 mbar, insbesondere auf 1 bis 10 mbar erfolgt. Damit ist das erfindungsgemäße Verfahren gegenüber dem geschilderten Stand der Technik mit einer nachfolgenden Festphasen-Polykondensation sehr vorteilhaft. Durch den Äquilibrierprozess nach dem bekannten Verfahren werden Abbaureaktionen ausgelöst, die die Polymerqualität verschlechtern bzw. einem ausreichenden Molekulargewichtsabfall entgegenwirken, was erfindungsgemäß vollkommen vermieden wird. Hier entfällt zudem, wie bereits gesagt, der nach dem Stand der Technik notwendige Verfahrensschritt der Festphasen-Polykondensation, der zu nachteiligen Produkten führt und zudem mit Zeit und Kosten verbunden ist.

Nachfolgend wird die Erfindung anhand von Beispielen noch näher erläutert, welche eine typische Prozesskette mit den einzelnen darin vorkommenden Prozessschritten von der Herstellung der Ausgangsverbindungen in der Synthese bis zum gefärbten Produkt darstellen. Diese Beispiele sollen nur erläuternden Charakter haben.

### Beispiel 1 (Herstellung des modifizierten AH-Salzes)

3-Hydroxyphenyl-phosphinyl-propionsäure (HPP) wird in der 10-20fachen Menge Wasser und bei einer Temperatur von 40°C gelöst. Dann wird portionsweise die äquimolare Menge 1,6-Diaminohexan (HDMA) zugegeben, wobei der pH-Wert der wässrigen Lösung von pH 2 auf pH 7 ansteigt. Nach Abziehen des Lösungsmittels Wasser verbleibt das modifizierte AH-Salz als weißer Rückstand, der aus Methanol umkristallisiert werden kann. Die dabei erreichte Ausbeute beträgt 97,4%. Der Schmelzpunkt des AH-Salzes ermittelt aus einer DSC-Messung beträgt 226-227°C.

### Beispiel 2 (Synthese des Phosphor-modifizierten Polyamids)

Ein bis 25 bar druckstabiler Stahlautoklav wird mit dem modifiziertem AH-Salz nach Beispiel 1 und einem üblichen, kommerziellen AH-Salz aus 1,6-Diaminohexan und Adipinsäure im Gewichtsverhältnis 1:9 sowie mit der etwa vierfachen molaren Menge Wasser gefüllt und unter Stickstoff gesetzt. Dann wird der Reaktor verschlossen und dessen Inhalt innerhalb von drei Stunden auf 223°C erhitzt. Der Druck im Reaktor steigt dabei auf 20,5 bar. Danach wird innerhalb von 45 Minuten langsam entspannt und gleichzeitig weiter auf 276°C erhitzt. Das bei der Reaktion freigewordene Wasser wird über einen aufsteigenden und einen absteigenden Kühler vom Reaktionsprodukt abgetrennt. Das Drehmoment des Rührers im Reaktor nimmt gegen Ende der Entspannungs- und Evakuierungsphase sprunghaft zu und erreicht einen konstanten Wert, der den Zeitpunkt des Austrags des Polymers aus dem Reaktor signalisiert. Der Austrag der Schmelze aus dem Reaktor erfolgt durch Anlegen von Stickstoffdruck in Form eines Strangs, der direkt unter dem Auslassventil in einem Eisbad verfestigt und nach Abzug aus dem Eisbad direkt in einem Granulator zu einem Stranggranulat verarbeitet wird. Das so hergestellte Granulat wird anschließend mit Wasser ausgekocht und für die weitere Verarbeitung im Vakuum bei 100°C auf eine Restfeuchte von 250 ppm getrocknet. Der Phosphorgehalt im fertigen Polymer erreicht einen Maximalwert von etwa 1%. Der Schmelzpunkt des Polymers beträgt 252°Cund die in 96%iger Schwefelsäure bei 25,00°C gemessene relative Viskosität der 1%-igen Polymerlösung 2,48.Die farbmetrischen Werte gemessen am Granulat werden zu L*= 59,16, a*= +1,23 und b*= +18,99 ermittelt.

### Beispiel 3 (Herstellung eines Gemisches aus modifiziertem Polyamid und kommerziellem PA6-Granulat)

Das zuvor hergestellte modifizierte Polyamid wird im Gewichtsverhältnis 1:9 mit einem kommerziellen PA6-Granulat (z.B.: Ultramid BS24N03 von BASF) gemischt und als solches in Form eines Dry-Blends verarbeitet. Dazu wird eine Schmelzspinnanlage verwendet, die aus einem Ein-Schnecken-Extruder, einer Schmelzspinnpumpe und Düsenpackung sowie einem Schnellwickler besteht, mit dem das hergestellte Filamentgarn bei einer Abzugsgeschwindigkeit von 4000 m/min auf Spulen aufgewickelt wird. Das Filamentgarn besteht aus 24 Einzelfilamenten und besitzt einen Titer von etwa 63 dtex. Die im Reißversuch ermittelten mechanischen Garndaten betragen 38,4 cN/tex für die Reißfestigkeit, 54% für die Reißdehnung und 283,4 cN/tex für den Anfangsmodul. Bei der Prüfung des Brennverhaltens der aus dem auf etwa 25% Restdehnung nachverstreckten Filamentgarn hergestellten Gestricke ergibt sich im horizontalen Brenntest, dass das Gestrick auch mit einer mehrere Sekunden anstehenden Bunsenbrennerflamme nicht entzündet werden kann.

**Tabelle 1. Schmelztemperaturen von Polyamiden aus aliphatischen Diaminen und aliphatischen Dicarbonsäuren**

| Diamin | Dicarbonsäure | Polyamid | Schmelztemp. [°C] |
|---|---|---|---|
| Butandiamin-(1,4) | Adipinsäure | 4.6 | 278-295 |
| | Pimelinsäure | 4.7 | 233 |
| | Korksäure | 4.8 | 250 |
| | Azelainsäure | 4.9 | 223 |
| | Sebacinsäure | 4.10 | 239 |
| Pentandiamin-(1,5) | Glutarsäure | 5.5 | 198 |
| | Adipinsäure | 5.6 | 223 |
| | Pimelinsäure | 5.7 | 183 |
| | Korksäure | 5.8 | 202 |
| | Azelainsäure | 5.9 | 179 |
| | Sebacinsäure | 5.10 | 186-195 |
| Hexandiamin-(1,6) | Adipinsäure | 6.6 | 255-260 |
| | Pimelinsäure | 6.7 | 202-228 |
| | Korksäure | 6.8 | 220-232 |
| | Azelainsäure | 6.9 | 185-226 |
| | Sebacinsäure | 6.10 | 209-223 |
| Heptandiamin-(1,7) | Adipinsäure | 7.6 | 226-250 |
| | Pimelinsäure | 7.7 | 196-2214 |
| | Sebacinsäure | 7.10 | 187-208 |
| Octandiamin-(1,8) | Adipinsäure | 8.6 | 235-250 |
| | Korksäure | 8.8 | 205-225 |
| | Sebacinsäure | 8.10 | 197-210 |
| Nonandiamin-(1,9) | Adipinsäure | 9.6 | 205 |
| | Azelainsäure | 9.9 | 165 |
| | Sebacinsäure | 9.10 | 179 |
| Decandiamin-(1,10) | Adipinsäure | 10.6 | 230-236 |
| | Korksäure | 10.8 | 208-217 |
| | Sebacinsäure | 10.10 | 194-203 |

Durch die Kombination der bezeichneten aliphatischen Diaminen und Dicarbonsäuren ist eine Vielzahl von Polyamiden erhältlich, deren Schmelztemperaturen in einem für das Schmelzspinnverfahren günstigen Bereich von etwa 180 bis 280°C liegen.

## Patentansprüche

1. Flammfestes Polyamid als Kondensationsprodukt von Dicarbonsäuren mit Diaminen sowie einer flammhemmenden Phosphorverbindung, **dadurch gekennzeichnet, dass** das flammfeste Polyamid FR in seiner Hauptkette neben den Amid-Struktureinheiten der Formel (I)
-CO-NH- (I)
Phosphinsäureamid-Struktureinheiten der Formel (II)
-PO(R¹)-NH- (II)
enthält, wobei R¹ Wasserstoff oder einen organischen Rest bedeutet und in den einzelnen Phosphinsäureamid-Struktureinheiten innerhalb der Hauptkette unterschiedlich sein kann, und dass das Polyamid FR eine relative Viskosität, gemessen als 1%ige Lösung in 96%iger Schwefelsäure bei 25°C, von mindestens 2,0 (nach DIN 51562) erreicht.

2. Flammfestes Polyamid nach Anspruch 1, **dadurch gekennzeichnet, dass** der organische Rest R¹ eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- oder Tolylgruppe, eine Alkylarylgruppe, insbesondere eine Triphenylmethylgruppe, und/oder eine Arylalkylgruppe, insbesondere eine i-Propylphenyl-, t-Butylphenyl- oder Nonylphenylgruppe bedeutet.

3. Flammfestes Polyamid nach Anspruch 2, **dadurch gekennzeichnet, dass** die C₁-C₃-Alkylgruppe eine Methyl-, Ethyl- und/oder eine 2-Propylgruppe darstellt.

4. Flammfestes Polyamid nach einem der Ansprüche 1 bis 3, **dadurch gekennzeichnet, dass** es aufgrund der Phosphinsäureamid-Struktureinheiten und bezogen auf das flammfeste Polyamid FR mindestens 0,01 und/oder höchstens 10,0 Gew.-% Phosphor enthält.

5. Flammfestes Polyamid nach Anspruch 4, **dadurch gekennzeichnet, dass** das Polyamid FR 0,01 bis 8 Gew.-%, insbesondere 0,01 bis 4,0 Gew.-% Phosphor enthält.

6. Flammfestes Polyamid nach Anspruch 5, **dadurch gekennzeichnet, dass** es 0,01 bis 1,5 Gew.-% Phosphor enthält.

7. Flammfestes Polyamid nach mindestens einem der vorhergehenden Ansprüche, **dadurch gekennzeichnet, dass** es eigenschaftsverbessernde Additive, insbesondere UV-Stabilisatoren, Thermo-Stabilisatoren und/oder Mattierungsmittel, enthält.

8. Flammfestes Polyamid nach Anspruch 7, **dadurch gekennzeichnet, dass** es, bezogen auf das Polyamid FR, 0,01 bis 1,0 Gew.-% Additiv enthält.

9. Flammfestes Polyamid nach Anspruch 8, **dadurch gekennzeichnet, dass** es, bezogen auf das Polyamid FR, 0,5 bis 0,7 Gew.-% Additiv enthält.

10. Flammfestes Polyamid nach mindestens einem der vorhergehenden Ansprüche, **dadurch gekennzeichnet, dass** es eine Nichtentflammbarkeit aufweist, die den Vorgaben der Vorschrift UL 94 V-0 entspricht.

11. Flammfestes Polyamid nach mindestens einem der vorhergehenden Ansprüche, **dadurch gekennzeichnet, dass** die relative Viskosität (gemessen nach DIN 51562) mindestens 2,4 erreicht.

12. Flammfestes Polyamid nach mindestens einem der vorhergehenden Ansprüche, **dadurch gekennzeichnet, dass** die relative Viskosität (gemessen nach DIN 51562) mindestens 2,4 und/oder höchstens 4,0, erreicht.

13. Flammfestes Polyamid nach mindestens einem der vorhergehenden Ansprüche, **dadurch gekennzeichnet, dass** es beruht auf
PA6.9 (Hexamethylendiamin/Acelainsäure),
PA6.12 (Hexymethylendiamin/Dodecansäure),
PA4.6 (Tetramethylendiamin/Adipinsäure),
PA12.12 (Dodecandiamin/Dodecandisäure) oder
PA6.6 (Hexamethylendiamin/Adipinsäure),
jeweils in erfindungsgemäß modifizierter Form.

14. Flammfestes Polyamid nach mindestens einem der vorhergehenden Ansprüche, **dadurch gekennzeichnet, dass** es in einem Gemisch mit einem weiteren Polyamid in Form eines nicht flammfesten Polyamids, insbesondere mit Polyamid 6 (Polycaprolactam), vermischt ist, wobei der Phosphorgehalt des Gemisches durch das flammfeste einbezogene Polyamid FR auf mindestens 0,01 Gew.-% und/oder höchstens 10,0 Gew.-%, insbesondere höchstens 8,0 Gew.-% eingestellt ist.

15. Flammfestes Polyamid nach Anspruch 14, **dadurch gekennzeichnet, dass** der Phosphorgehalt auf 0,01 bis 4,0 Gew.-%, insbesondere 0,01 bis 1,5 Gew.-%, eingestellt ist.

16. Flammfestes Polyamid nach Anspruch 14 oder 15, **dadurch gekennzeichnet, dass** das Gemisch aus flammfestem Polyamid FR und dem nicht flammfesten Polyamid eine relative Viskosität (gemessen nach DIN 51562) von mindestens 2,0, insbesondere von mindestens 2,4 und/oder höchstens 4,0 erreicht.

17. Verfahren zur Herstellung des flammfesten Polyamids nach mindestens einem der Ansprüche 1 bis 16, **dadurch gekennzeichnet, dass** im Rahmen einer Polyamid-Synthese ein oder mehrere Diamine mit einer oder mehreren Dicarbonsäuren unter einem Druck von mindestens 16 bar, insbesondere einem Druck von 20,0 bar bis 25 bar, und erhöhter Temperatur, insbesondere einer Temperatur von weniger als 295°C, insbesondere von 230°C bis 280°C, in Gegenwart von Wasser, wobei die Menge an Wasser insbesondere höchstens 25 Gew.-% und/oder insbesondere mindestens 10 Gew.-%, bezogen auf die Reaktionsmischung, beträgt, um den unter der gewählten Reaktionstemperatur benötigten Druck im Reaktor aufzubauen, und mit einer oder mehreren Diphosphinsäuren der Formel (III) 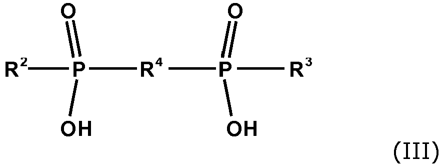 und/oder mit einer oder mehreren Carbon-Phosphinsäuren der Formel (IV), 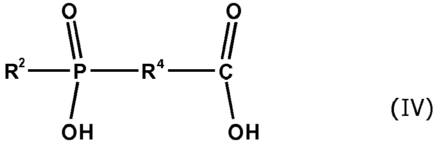 polykondensiert werden, wobei unter den der Polykondensation zugrunde liegenden stöchiometrischen Bedingungen die Dicarbonsäure zum Teil durch die Diphosphinsäure (III) und/oder die Carbon-Phosphinsäure (IV) ersetzt wird, wobei die Dicarbonsäure, die Diphosphinsäure und die Carbon-Phosphinsäure in Form der AH-Salze mit den eingesetzten Diaminen der Polykondensation unterworfen werden, wobei nach der Polykondensation eine Drucksenkung im Reaktionsraum auf weniger als 250 mbar, insbesondere weniger als 100 mbar durchgeführt wird, und
wobei in den Formeln (III) und (IV) bedeuten:
R² und R³, unabhängig voneinander, eine lineare, cyclische oder verzweigte C₁-C₆-Alkylgruppe, insbesondere eine C₁-C₃-Alkylgruppe, eine Arylgruppe, insbesondere mit bis zu drei kondensierten oder nicht kondensierten Ringen, insbesondere in Form einer Phenyl-, Benzyl-, Naphthyl-, Phenantryl-, Mesityl- oder Tolylgruppe, eine Alkylarylgruppe, insbesondere eine Triphenylmethylgruppe, und/oder eine Arylalkylgruppe, insbesondere eine i-Propylphenyl, t.Butylphenyl- oder Nonylphenylgruppe, und
R⁴ einen zweiwertigen organischen Rest, insbesondere in Form eines linearen, cyclischen oder verzweigten C₁-C₁₀-Alkylen-, insbesondere C₁-C₄-Alkylen-Restes, eines C₁-C₁₀-Alkenylen-, insbesondere eines C₁-C₆-Alkenylen-Restes, eines C₆-C₁₀-Arylen-, insbesondere eines 1,4-Phenylen-Restes

18. Verfahren nach Anspruch 17, **dadurch gekennzeichnet, dass** die Drucksenkung auf 1 bis 100 mbar, insbesondere 1 bis 50 mbar, durchgeführt wird.

19. Verfahren nach Anspruch 18, **dadurch gekennzeichnet, dass** die Drucksenkung auf weniger als 100 mbar, insbesondere 1 bis 10 mbar durchgeführt wird.

20. Verfahren nach einem der Ansprüche 17 bis 19, **dadurch gekennzeichnet, dass** das Mengenverhältnis der Reaktionspartner in Form der Diamine, Dicarbonsäuren, Diphosphinsäuren sowie der Carbon-Phosphinsäuren so eingestellt wird, dass der Phosphorgehalt des erhaltenen flammfesten Polyamid-Verfahrenserzeugnisses, bezogen auf das Polyamid FR mindestens 0,01 Gew.-% und/oder höchstens 10,0 Gew.-% beträgt.

21. Verfahren nach mindestens einem der Ansprüche 17 bis 20, **dadurch gekennzeichnet, dass** die aus einem AH-Salz der Diphosphinsäure der Formel (III) und/oder der Carbon-Phosphinsäure der Formel (IV) hergestellten flammfesten Polyamide ohne Abmischung oder in Abmischung mit einem weiteren nicht-Phosphor-haltigen, nicht flammfesten Polyamid vermischt werden und der weiteren Verwendung zugeführt werden.

22. Verwendung des flammfesten Polyamids nach mindestens einem der Ansprüche 1 bis 16 zur Herstellung von Formkörpern nach dem Extrusionsverfahren, insbesondere zur Herstellung von Folien, Bauteilen, Monofilamentgarnen, Multifilamentgarnen sowie Stapelfasergarnen.

23. Verwendung nach Anspruch 22, **dadurch gekennzeichnet, dass** Extrusionsverfahren in Form des Blasform-, Spritzguss- oder Schmelzverfahrens angewandt werden.

## Claims

1. A flame-retardant polyamide as condensation product of dicarboxylic acids with diamines and also a flame-retardant phosphorus compound, **characterized in that** the flame-retardant polyamide FR contains in its main chain not only the amide structural units of the formula (I)
-CO-NH- (I)
but also phosphinamide structural units of the formula (II)
-PO(R¹)-NH- (II),
R¹ being hydrogen or an organic group, and in which individual phosphinamide structural units within the main chain may be different, and **in that** the polyamide FR attains a relative viscosity, measured as a 1% strength solution in 96% strength sulfuric acid at 25°C, of at least 2.0 (according to DIN 51562).

2. A flame-retardant polyamide according to claim 1, **characterized in that** the organic group R¹ is a linear, cyclic or branched C₁-C₆ alkyl group, more especially a C₁-C₃ alkyl group, an aryl group, more especially having up to three fused or unfused rings, more especially in the form of a phenyl, benzyl, naphthyl, phenanthryl, mesityl or tolyl group, an alkylaryl group, more especially a triphenylmethyl group, and/or an arylalkyl group, more especially an i-propylphenyl, t-butylphenyl or nonylphenyl group.

3. A flame-retardant polyamide according to claim 2, **characterized in that** the C₁-C₃ alkyl group is a methyl, ethyl, and/or a 2-propyl group.

4. A flame-retardant polyamide according to any one of claims 1 to 3, **characterized in that** on the basis of the phosphinamide structural units and relative to the flame-retardant polyamide FR, it contains at least 0.01 and/or not more than 10.0 wt% of phosphorus.

5. A flame-retardant polyamide according to claim 4, **characterized in that** the polyamide FR contains 0.01 to 8 wt%, more especially 0.01 to 4.0 wt%, of phosphorus.

6. A flame-retardant polyamide according to claim 5, **characterized in that** it contains 0.01 to 1.5 wt% of phosphorus.

7. A flame-retardant polyamide according to at least one of the preceding claims, **characterized in that** it contains property-improving additives, more especially UV stabilizers, heat stabilizers and/or matting agents.

8. A flame-retardant polyamide according to claim 7, **characterized in that**, based on the polyamide FR, it contains 0.01 to 1.0 wt% of additive.

9. A flame-retardant polyamide according to claim 8, **characterized in that**, based on the polyamide FR, it contains 0.5 to 0.7 wt% of additive.

10. A flame-retardant polyamide according to at least one of the preceding claims, **characterized in that** it has a nonflammability which meets the mandates of the UL 94 V-0 protocol.

11. A flame-retardant polyamide according to at least one of the preceding claims, **characterized in that** the relative viscosity (measured according to DIN 51562) attains at least 2.4.

12. A flame-retardant polyamide according to at least one of the preceding claims, **characterized in that** the relative viscosity (measured according to DIN 51562) attains at least 2.4 and/or not more than 4.0.

13. A flame-retardant polyamide according to at least one of the preceding claims, **characterized in that** it is based on
PA6.9 (hexamethylenediamine/azelaic acid),
PA6.12 (hexamethylenediamine/dodecanoic acid),
PA4.6 (tetramethylenediamine/adipic acid),
PA12.12 (dodecanediamine/dodecanedioic acid) or
PA6.6 (hexamethylenediamine/adipic acid),
in each case in a form modified in accordance with the invention.

14. A flame-retardant polyamide according to at least one of the preceding claims, **characterized in that** it is mixed in a mixture with a further polyamide in the form of a non flame-retardant polyamide, more especially with polyamide 6 (polycaprolactam), the phosphorus content of the mixture being adjusted via the flame-retardant polyamide FR included to at least 0.01 wt% and/or not more than 10.0 wt%, more especially not more than 8.0 wt%.

15. A flame-retardant polyamide according to claim 14, **characterized in that** the phosphorus content is adjusted to 0.01 to 4.0 wt%, more especially 0.01 to 1.5 wt%.

16. A flame-retardant polyamide according to claim 14 or claim 15, **characterized in that** the mixture of flame-retardant polyamide FR and the non flame-retardant polyamide attains a relative viscosity (measured according to DIN 51562) of at least 2.0, more especially of at least 2.4 and/or not more than 4.0.

17. A process for producing the flame-retardant polyamide according to at least one of claims 1 to 16, **characterized in that** in a polyamide synthesis one or more diamines are subjected to polycondensation with one or more dicarboxylic acids under a pressure of at least 16 bar, more especially a pressure from 20.0 bar to 25 bar, and at elevated temperature, more especially a temperature of less than 295°C, more especially from 230°C to 280°C, in the presence of water, the amount of water more especially being not more than 25 wt% and/or more especially at least 10 wt%, based on the reaction mixture, in order to build up the pressure in the reactor that is required at the selected reaction temperature, and with one or more diphosphinic acids of the formula (III) 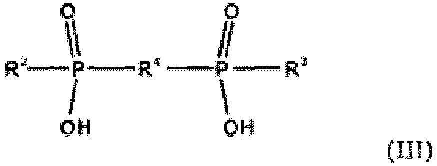 and/or with one or more carboxy-phosphinic acids of the formula (IV), 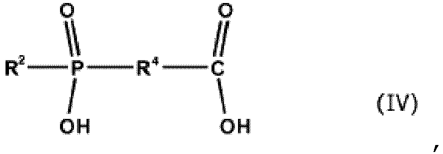 the dicarboxylic acid being replaced in part, under the stoichiometric conditions on which the polycondensation is based, by the diphosphinic acid (III) and/or by the carboxy-phosphinic acid (IV), the dicarboxylic acid, the diphosphinic acid, and the carboxy-phosphinic acid being subjected to the polycondensation in the form of the AH salts with the diamines used, the pressure in the reaction space after the polycondensation being lowered to less than 250 mbar, more especially less than 100 mbar, and
the following definitions applying to the formulae (III) and (IV):
R² and R³, independently of one another, are a linear, cyclic or branched C₁-C₆ alkyl group, more especially a C₁-C₃ alkyl group, an aryl group, more especially having up to three fused or unfused rings, more especially in the form of a phenyl, benzyl, naphthyl, phenanthryl, mesityl or tolyl group, an alkylaryl group, more especially a triphenylmethyl group, and/or an arylalkyl group, more especially an i-propylphenyl, t.butylphenyl or nonylphenyl group, and
R⁴ is a divalent organic group, more especially in the form of a linear, cyclic or branched C₁-C₁₀ alkylene, more especially C₁-C₄ alkylene group, a C₁-C₁₀ alkenylene, more especially a C₁-C₆ alkenylene group, or a C₆-C₁₀ arylene, more especially a 1,4-phenylene group.

18. A process according to claim 17, **characterized in that** the pressure is lowered to 1 to 100 mbar, more especially 1 to 50 mbar.

19. A process according to claim 18, **characterized in that** the pressure is lowered to less than 100 mbar, more especially 1 to 10 mbar.

20. A process according to any one of claims 17 to 19, **characterized in that** the proportion of the reactants in the form of the diamines, dicarboxylic acids, diphosphinic acids, and the carboxy-phosphinic acids is adjusted such that the phosphorus content of the flame-retardant polyamide process product obtained, based on the polyamide FR, is at least 0.01 wt% and/or not more than 10.0 wt%.

21. A process according to at least one of claims 17 to 20, **characterized in that** the flame-retardant polyamides produced from an AH salt of the diphosphinic acid of the formula (III) and/or of the carboxy-phosphinic acid of the formula (IV) are mixed without blending or in a blend with a further, non phosphorus-containing, non flame-retardant polyamide and are passed on for further use.

22. The use of the flame-retardant polyamide according to at least one of claims 1 to 16 for producing shaped articles by the extrusion process, more especially for producing films, components, monofilament yarns, multifilament yarns or staple fibre yarns.

23. The use according to claim 22, **characterized in that** extrusion processes are employed in the form of the blow-moulding, injection-moulding or melting process.

## Revendications

1. Polyamide ininflammable sous forme de produit de condensation d'acides dicarboxyliques avec des diamines et avec un composé phosphorique retardateur de flamme, **caractérisé en ce que** le polyamide ininflammable FR comporte dans sa chaîne principale, en plus de motifs structuraux d'amide de formule (I)
-CO-NH- (I)
des motifs structuraux de phosphinamide de formule (II)
-PO(R1)-NH- (II)
dans laquelle R¹ représente l'hydrogène ou un résidu organique et peut ne pas être le même dans les motifs structuraux de phosphinamide à l'intérieur de la chaîne principale, et **en ce que** le polyamide FR présente une viscosité relative, mesurée en tant que solution à 1 % dans de l'acide sulfurique à 96 % à 25°C, d'au moins 2,0 (d'après la norme DIN 51562).

2. Polyamide ininflammable selon la revendication 1, **caractérisé en ce que** le résidu organique R¹ présente un groupe alkyle en C₁-C₆ linéaire, cyclique ou ramifié, en particulier un groupe alkyle en C₁-C₃, un groupe aryle, en particulier ayant jusqu'à trois cycles condensés ou non condensés, en particulier sous la forme d'un groupe phényle, benzyle, naphtyle, phénanthryle, mésityle ou tolyle, un groupe alkylaryle, en particulier un groupe triphénylméthyle, et/ou un groupe arylalkyle, en particulier un groupe isopropylphényle, tertiobutylphényle ou nonylphényle.

3. Polyamide ininflammable selon la revendication 2, **caractérisé en ce que** le groupe alkyle en C₁ à C₃ est un groupe méthyle, éthyle et/ou 2-propyle.

4. Polyamide ininflammable selon l'une des revendications 1 à 3, **caractérisé en ce qu'**il contient, sur la base des motifs structuraux d'amide et par rapport au polyamide ininflammable FR, au moins 0,01 et/ou au maximum 10,0 % en poids de phosphore.

5. Polyamide ininflammable selon la revendication 4, **caractérisé en ce que** le polyamide FR comporte 0,01 à 8 % en poids, en particulier 0,01 à 4,0 % en poids de phosphore.

6. Polyamide ininflammable selon la revendication 5, **caractérisé en ce qu'**il comprend 0,01 à 1,5 % en poids de phosphore.

7. Polyamide ininflammable selon au moins l'une des revendications précédentes, **caractérisé en ce qu'**il comprend des additifs améliorant les propriétés, en particulier des stabilisants d'UV, des thermostabilisants, et/ou des agents matifiants.

8. Polyamide ininflammable selon la revendication 7, **caractérisé en ce qu'**il comprend 0,01 à 1,0 % en poids d'additif par rapport au polyamide FR.

9. Polyamide ininflammable selon la revendication 8, **caractérisé en ce qu'**il comprend 0,5 à 0,7 % en poids d'additif par rapport au polyamide FR.

10. Polyamide ininflammable selon au moins l'une des revendications précédentes, **caractérisé en ce qu'**il présente une ininflammabilité qui répond aux exigences de la prescription UL 94 V-0.

11. Polyamide ininflammable selon au moins l'une des revendications précédentes, **caractérisé en ce que** la viscosité relative (mesurée d'après DIN 51562) est d'au moins 2,4.

12. Polyamide ininflammable selon au moins l'une des revendications précédentes, **caractérisé en ce que** la viscosité relative (mesurée d'après DIN 51562) est d'au moins 2,4 et/ou d'au maximum 4,0.

13. Polyamide ininflammable selon au moins l'une des revendications précédentes, **caractérisé en ce qu'**il est à base de
PA6.9 (hexaméthylène diamine/acide azélaïque),
PA6.12 (hexaméthylène diamine/acide dodécanoïque),
PA4.6 (tétraméthylène diamine/acide adipique),
PA12.12 (dodécanediamine/diacide dodécanoïque) ou
PA6.6 (hexaméthylène diamine/acide adipique),
respectivement sous une forme modifiée selon l'invention.

14. Polyamide ininflammable selon au moins l'une des revendications précédentes, **caractérisé en ce qu'**il est mélangé dans un mélange avec un autre polyamide sous la forme d'un polyamide non ininflammable, en particulier avec du polyamide 6 (polycaprolactame), dans lequel la teneur en phosphore du mélange est ajustée par le polyamide ininflammable incorporé à un taux d'au moins 0,01 % en poids et/ou d'au maximum 10,0 % en poids, en particulier d'au maximum 8,0 % en poids.

15. Polyamide ininflammable selon la revendication 14, **caractérisé en ce que** la teneur en phosphore est ajustée à un taux de 0,01 à 4,0 % en poids, en particulier de 0,01 à 1,5 % en poids.

16. Polyamide ininflammable selon la revendication 14 ou 15, **caractérisé en ce que** le mélange constitué de polyamide ininflammable FR et de polyamide non ininflammable présente une viscosité relative (mesurée d'après DIN 51562) d'au moins 2,0, notamment d'au moins 2,4, et/ou d'au maximum 4,0.

17. Procédé de fabrication de polyamide ininflammable selon au moins l'une des revendications 1 à 16, **caractérisé en ce que**, dans le cadre d'une synthèse du polyamide, une ou plusieurs diamines sont polycondensées avec un ou plusieurs acides dicarboxyliques sous une pression d'au moins 16 bar, en particulier sous une pression de 20,0 bar à 25 bar, et à une température élevée, en particulier à une température inférieure à 295 °C, en particulier de 230 °C à 280 °C, en présence d'eau, dans lequel la quantité d'eau constitue en particulier au maximum 25 % en poids et/ou en particulier au moins 10 % en poids du mélange réactionnel afin de faire monter la pression nécessaire pour la température de réaction choisie, et avec un ou plusieurs acides diphosphiniques de formule (III) 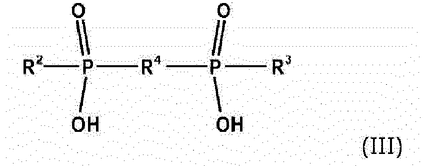 et/ou un ou plusieurs acides carboxyphosphiniques de formule (IV) 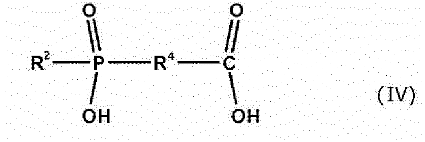 l'acide dicarboxylique étant partiellement remplacé par l'acide diphosphinique (III) et/ou l'acide carboxyphosphinique (IV) dans les conditions stoechiométriques à la base de la polycondensation, l'acide dicarboxylique, l'acide diphosphinique et l'acide carboxyphosphinique étant soumis à la polycondensation avec les diamines mises en oeuvre sous la forme de sels AH, une baisse de pression dans la chambre réactionnelle jusqu'à moins de 250 mbar, en particulier jusqu'à moins de 100 mbar, étant opérée après la polycondensation, et
dans les formules (III) et (IV) :
R² et R³, indépendamment l'un de l'autre, représentent un groupe alkyle en C₁ à C₆ linéaire, cyclique ou ramifié, en particulier un groupe alkyle en C₁ à C₃, un groupe aryle, en particulier ayant jusqu'à trois cycles condensés ou non condensés, en particulier sous la forme d'un groupe phényle, benzyle, naphtyle, phénanthryle, mésityle ou tolyle, un groupe alkylaryle, en particulier un groupe triphénylméthyle, et/ou un groupe arylalkyle, en particulier un groupe isopropylphényle, tertiobutylphényle ou nonylphényle, et
R⁴ est un résidu organique divalent, en particulier sous la forme d'un résidu alkylène en C₁-C₁₀ linéaire, cyclique ou ramifié, en particulier alkylène en C₁-C₄, un résidu alcénylène en C₁ à C₁₀, en particulier alcénylène en C₁ à C₆, arylène en C₆ à C₁₀, en particulier 1,4-phénylène.

18. Procédé selon la revendication 17, **caractérisé en ce que** la baisse de pression est opérée de 1 à 100 mbar, en particulier de 1 à 50 mbar.

19. Procédé selon la revendication 18, **caractérisé en ce que** la baisse de pression est opérée à moins de 100 mbar, en particulier de 1 à 10 mbar.

20. Procédé selon l'une des revendications 17 à 19, **caractérisé en ce que** le rapport quantitatif entre les partenaires réactionnels sous la forme de diamines, d'acides dicarboxyliques, d'acides diphosphiniques et d'acides carboxyphosphiniques est ajusté de telle sorte que la teneur en phosphore du produit obtenu de polyamide ininflammable à partir du procédé, par rapport au polyamide FR, est d'au moins 0,01 % en poids et/ou d'au maximum 10,0 % en poids.

21. Procédé selon l'une des revendications 17 à 20, **caractérisé en ce que** les polyamides ininflammables fabriqués à partir d'un sel AH de l'acide diphosphinique de formule (III) et/ou de l'acide carboxyphosphinique de formule (IV) sont mélangés sans adjonction ou avec adjonction d'un autre polyamide non ininflammable ne contenant pas de phosphore, et amenés à l'utilisation ultérieure.

22. Utilisation du polyamide ininflammable selon au moins l'une des revendications 1 à 16 pour la fabrication de corps moulés d'après le procédé d'extrusion, en particulier pour la fabrication de feuilles, de composants, de fils monofilamentaires, de fils multifilamentaires et de fils de fibres empilées.

23. Utilisation selon la revendication 22, **caractérisée en ce que** les procédés d'extrusion sont appliqués sous la forme du procédé de formage par soufflage, de moulage par injection ou de fusion.
